# EUROPEAN PATENT APPLICATION

(11) **EP 4 838 887 A1**
(43) Date of publication of application: **11.11.2026**
(21) Application number: 25741491.2
(22) Date of filing: 14.01.2025
(51) Int. Cl.: H04N 19/44

(54) **IMAGE DECODING METHOD AND APPARATUS, ELECTRONIC DEVICE, AND READABLE STORAGE MEDIUM**

(30) Priority: 17.01.2024 CN 202410068877
(71) Applicant: Vivo Mobile Communication Co., Ltd., Dongguan, Guangdong 523863 (CN)
(72) Inventor: CHEN, Shuang, Dongguan, Guangdong 523863 (CN)
(74) Representative: Murgitroyd & Company
(86) International application number: PCT/CN2025/072309
(87) International publication number: WO 2025/152930

(57) **Abstract**

This application discloses an image decoding method and apparatus, an electronic device, and a readable storage medium, and pertains to the field of image processing technologies. Embodiments of this application provide an image decoding method. The method includes: An electronic device determines a value of N based on a quantity and/or a load status of CPU cores, where N is an integer greater than 1. The electronic device obtains N encoded bit sequences based on N and an encoded bitstream corresponding to a target image. The electronic device decodes the N encoded bit sequences through N decoding threads, where one of the decoding threads corresponds to one of the encoded bit sequences.

## Description

This application claims priority to Chinese Patent Application No 202410068877.8 filed with the China National Intellectual Property Administration on January 17, 2024 and entitled "IMAGE DECODING METHOD AND APPARATUS, ELECTRONIC DEVICE, AND READABLE STORAGE MEDIUM", which is incorporated herein by reference in its entirety.

### TECHNICAL FIELD

This application pertains to the field of image processing technologies, and specifically relates to an image decoding method and apparatus, an electronic device, and a readable storage medium.

### BACKGROUND

Usually, in a scenario of performing image decoding on an encoded file corresponding to an image (for example, a Joint Photographic Experts Group (Joint Photographic Experts Group, JPEG) image), an electronic device may perform image decoding on the encoded file via a central processing unit (Central Processing Unit, CPU) core of the electronic device, for example, perform Huffman entropy decoding and discrete cosine transform (Discrete Cosine Transform, DCT) inverse transform on the encoded file to obtain YUV image data of the JPEG image, and convert the obtained YUV data into red green blue (Red Green Blue, RGB) data, so that the electronic device can display the JPEG image based on the RGB data.

However, image decoding efficiency of the electronic device is low because the electronic device may need a long period of time to perform Huffman entropy decoding and DCT inverse transform on the encoded file via the CPU core to obtain the RGB data for the JPEG image.

### SUMMARY

Objectives of embodiments of this application are to provide an image decoding method and apparatus, an electronic device, and a readable storage medium, to resolve a problem of low image decoding efficiency of the electronic device.

According to a first aspect, an embodiment of this application provides an image decoding method. The method includes: An electronic device determines a value of N based on a quantity and/or a load status of CPU cores, where N is an integer greater than 1. The electronic device obtains N encoded bit sequences based on N and an encoded bitstream corresponding to a target image. The electronic device decodes the N encoded bit sequences through N decoding threads, where one of the decoding threads corresponds to one of the encoded bit sequences.

According to a second aspect, an embodiment of this application provides an image decoding apparatus. The image decoding apparatus includes a processing module, configured to: determine a value of N based on a quantity and/or a load status of CPU cores, where N is an integer greater than 1; obtain N encoded bit sequences based on N and an encoded bitstream corresponding to a target image; and decode the N encoded bit sequences through N decoding threads, where one of the decoding threads corresponds to one of the encoded bit sequences.

According to a third aspect, an embodiment of this application provides an electronic device. The electronic device includes a processor and a storage. The storage stores a program or instructions executable on the processor; and when the program or instructions are executed by the processor, the steps of the method as described in the first aspect are implemented.

According to a fourth aspect, an embodiment of this application provides a readable storage medium. A program or instructions are stored on the readable storage medium; and when the program or instructions are executed by a processor, the steps of the method as described in the first aspect are implemented.

According to a fifth aspect, an embodiment of this application provides a chip. The chip includes a processor and a communication interface, the communication interface is coupled to the processor, and the processor is configured to run a program or instructions to implement the steps of the method as described in the first aspect.

According to a sixth aspect, an embodiment of this application provides a computer program product. The program product is stored in a storage medium, and the program product is executed by at least one processor to implement the steps of the method as described in the first aspect.

In embodiments of this application, the electronic device can determine the value of N based on at least one of the quantity of CPU cores and the load status of the CPU cores, where N is an integer greater than 1, and obtain the N encoded bit sequences based on N and the encoded bitstream corresponding to the target image, so that the electronic device can decode the N encoded bit sequences through the N decoding threads. The electronic device determines the value of N based on at least one of the quantity of CPU cores and the load status of the CPU cores, that is, the value of N is related to the quantity of CPU cores and/or the load status of the CPU cores. This can avoid the following case: The electronic device needs a long period of time to decode an image due to CPU overload. In addition, because the N encoded bit sequences are decoded through the N decoding threads, time for decoding the image can be shortened. In summary, image decoding efficiency of the electronic device is improved.

### BRIEF DESCRIPTION OF DRAWINGS

FIG. 1 is a first schematic flowchart of an image decoding method according to an embodiment of this application;
FIG. 2 is a second schematic flowchart of an image decoding method according to an embodiment of this application;
FIG. 3 is a third schematic flowchart of an image decoding method according to an embodiment of this application;
FIG. 4 is a fourth schematic flowchart of an image decoding method according to an embodiment of this application;
FIG. 5a is a first schematic diagram of storing, by an electronic device, decoded data in a storage space of a memory of the electronic device;
FIG. 5b is a second schematic diagram of storing, by an electronic device, decoded data in a storage space of a memory of the electronic device;
FIG. 6 is a third schematic diagram of storing, by an electronic device, decoded data in a storage space of a memory of the electronic device;
FIG. 7 is a fifth schematic flowchart of an image decoding method according to an embodiment of this application;
FIG. 8 is a schematic diagram of a structure of an image decoding apparatus according to an embodiment of this application;
FIG. 9 is a first schematic diagram of a structure of hardware of an electronic device according to an embodiment of this application; and
FIG. 10 is a second schematic diagram of a structure of hardware of an electronic device according to an embodiment of this application.

### DESCRIPTION OF EMBODIMENTS

The technical solutions in embodiments of this application are clearly described below with reference to the accompanying drawings in embodiments of this application. It is clear that the described embodiments are a part of embodiments of this application, rather than all embodiments. Based on embodiments in this application, all other embodiments obtained by those of ordinary skill in the art belong to the scope of protection of this application.

The terms involved in embodiments of this application are explained below.

### 1. Heterogeneous computing unit

The heterogeneous computing unit is usually a computing unit different from a CPU. For example, computing units such as a digital signal processor (Digital Signal Processor, DSP), a neural-network processing unit (Neural-Network Processing Unit, NPU), a graphics processing unit (Graphics Processing Unit, GPU), and a video processing unit (Video Processing Unit, VPU) all belong to the heterogeneous computing unit.

A main frequency of the heterogeneous computing unit is less than a main frequency of a CPU of an electronic device, that is, computing power of the heterogeneous computing unit is less than computing power of the electronic device, and power consumption of the heterogeneous computing unit for performing an operation is less than power consumption of the electronic device performing an operation via the CPU.

### 2. Other terms

The terms "first", "second" and the like in the specification and claims of this application are used to distinguish between similar objects and are not used to describe a specific order or sequence. It should be understood that the data used in this way can be interchanged under appropriate circumstances, so that embodiments of this application can be implemented in sequences other than those illustrated or described herein. In addition, the objects distinguished by "first", "second" and the like are usually of one type, and a quantity of objects is not limited. For example, there may be one or more first objects. In addition, the "and/or" in the specification and claims indicates at least one of the connected objects, and the character "/" generally indicates that the preceding and following related objects are in an "or" relationship.

An image decoding method and apparatus, an electronic device, and a readable storage medium provided by embodiments of this application are described in detail below by using specific embodiments and their application scenarios with reference to the accompanying drawings.

The image decoding method provided by embodiments of this application is applied in a scenario of image decoding.

The image decoding method provided by embodiments of this application may be performed by an image decoding apparatus, or an electronic device, or a functional module or entity in an electronic device. In embodiments of this application, the image decoding method provided by embodiments of this application is described by using an electronic device performing the image decoding method as an example.

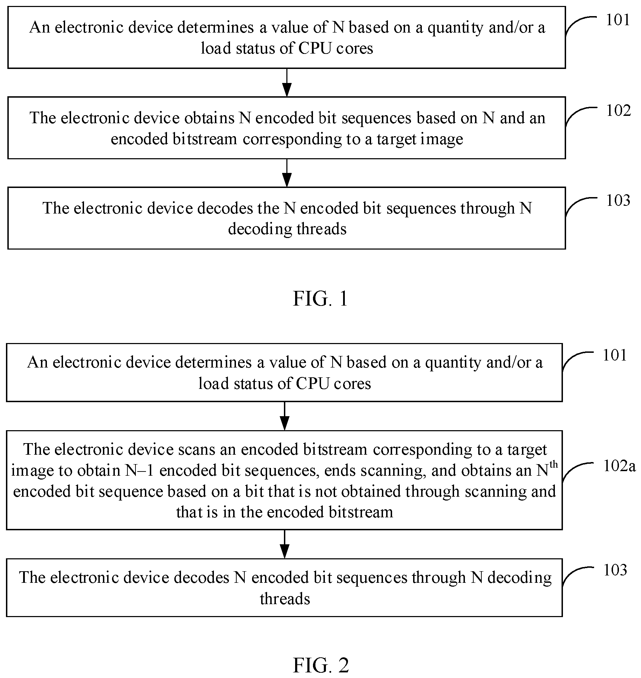

FIG. 1 is a schematic flowchart of an image decoding method according to an embodiment of this application. As shown in FIG. 1, an image decoding method provided by an embodiment of this application may include steps 101 to 103.

Step 101: An electronic device determines a value of N based on a quantity and/or a load status of CPU cores.

In this embodiment of this application, N is an integer greater than 1.

In some embodiments of this application, in a case that the electronic device obtains a target image, the electronic device can determine the value of N based on click input of a user on a thumbnail of the target image and the quantity and/or the load status of CPU cores.

In some embodiments of this application, the target image may be any one of the following: a JPEG image, a portable network graphic (Portable Network Graphic, PNG) image, a graphics interchange format (Graphics Interchange Format, GIF) image, a WEBP image, an AVIF image, or the like.

In some embodiments of this application, the target image may be a frame of image in a target video. The target video may be any one of the following: a Moving Pictures Experts Group (Moving Pictures Experts Group, Mpeg)-4 video, an H.264/265 video, a VP8/9 video, or the like.

In some embodiments of this application, the electronic device may obtain the target image through downloading from a server, or the electronic device may obtain the target image through shooting via a camera of the electronic device.

In this embodiment of this application, the above N can indicate a quantity of decoding threads required for decoding the target image.

In some embodiments of this application, the electronic device may determine the value of N based on a quantity of first CPU cores in a CPU; and/or the electronic device may determine the value of N based on a load status of each first CPU core in a CPU. The first CPU core may be specifically: a CPU core with a highest operating frequency among CPU cores included in the CPU, or a CPU core with a second highest operating frequency among CPU cores included in the CPU, or a CPU core with a lowest operating frequency among CPU cores included in the CPU. The first CPU core may alternatively be any combination of CPU cores included in the CPU.

For example, it is assumed that the CPU of the electronic device includes a plurality of CPU cores, the plurality of CPU cores include a super large CPU core, a large CPU core, and a small CPU core, the super large CPU core is a CPU core with a highest operating frequency among the plurality of CPU cores, the large CPU core is a CPU core with a second highest operating frequency among the plurality of CPU cores, and that the small CPU core is a CPU core with a lowest operating frequency among the plurality of CPU cores. In this case, the electronic device can determine the value of N based on a quantity and/or load status of first CPU cores (for example, super large CPU cores), or the electronic device can determine the value of N based on a quantity and/or load status of first CPU cores (for example, large CPU cores), or the electronic device can determine the value of N based on a quantity and/or load status of first CPU cores (for example, super large CPU cores and large CPU cores), and so on.

Optionally, in a case that the electronic device determines the value of N based on the quantity of CPU cores, the electronic device can directly determine the quantity of first CPU cores as the value of N.

For example, it is assumed that the CPU of the electronic device includes a plurality of CPU cores, the plurality of CPU cores include one super large CPU core, three large CPU cores, and four small CPU cores, and that the first CPU core is a large CPU core. In this case, the electronic device can directly determine the quantity, 3, of large CPU cores as the value of N, that is, N=3.

Optionally, in a case that the electronic device determines the value of N based on the load status of the CPU cores, the electronic device can first obtain a utilization rate of each first CPU core, then determine a quantity of first CPU cores whose utilization rate is less than a preset utilization rate, and determine the quantity as the value of N.

For example, it is assumed that the CPU of the electronic device includes a plurality of CPU cores, the plurality of CPU cores include one super large CPU core, three large CPU cores, and four small CPU cores, the first CPU core is a large CPU core, and that the preset utilization rate is 70%. In this case, the electronic device can first obtain a utilization rate of each first CPU core, for example, a utilization rate of large CPU core 1 being 40%, a utilization rate of large CPU core 2 being 50%, and a utilization rate of large CPU core 3 being 80%, then determine a quantity of first CPU cores whose utilization rate is less than the preset utilization rate (that is, 70%), that is, large CPU core 1 and large CPU core 2, namely, 2, and determine the quantity, 2, as the value of N, that is, N=2.

Step 102: The electronic device obtains N encoded bit sequences based on N and an encoded bitstream corresponding to the target image.

In some embodiments of this application, the electronic device can perform, based on N, blockwise processing on the encoded bitstream corresponding to the target image, to obtain the N encoded bit sequences corresponding to the N image blocks.

It can be understood that each encoded bit sequence is an encoded bit sequence corresponding to one image block.

The following uses examples to describe a specific scheme for the electronic device to perform, based on N, blockwise processing on the encoded bitstream corresponding to the target image:

In some embodiments of this application, with reference to FIG. 1, as shown in FIG. 2, step 102 can be specifically implemented by step 102a.

Step 102a: The electronic device scans the encoded bitstream corresponding to the target image to obtain N-1 encoded bit sequences, ends scanning, and obtains the N^{th} encoded bit sequence based on a bit that is not obtained through scanning and that is in the encoded bitstream.

In some embodiments of this application, the electronic device can first scan the encoded bitstream to determine the 1^{st} encoded bit sequence corresponding to the 1^{st} image block, then scan the encoded bitstream to determine the 2^{nd} encoded bit sequence corresponding to the 2^{nd} image block, and so on, until the (N-1)^{th} encoded bit sequence corresponding to the (N-1)^{th} image block is determined, to obtain the N-1 encoded bit sequences.

In some embodiments of this application, after obtaining the N-1 encoded bit sequences, the electronic device can determine an encoded bit sequence in the encoded bitstream other than the N-1 encoded bit sequences as the N^{th} encoded bit sequence, to obtain the N encoded bit sequences.

It can be learned that after the N-1 encoded bit sequences (that is, a part of encoded bit sequences) are obtained through scanning, the electronic device can end scanning and obtain the N^{th} encoded bit sequence (that is, the remaining encoded bit sequence), without performing scanning to obtain the N encoded bit sequences (that is, all encoded bit sequences) before ending scanning. Therefore, time spent by the electronic device in scanning the encoded bitstream can be shortened, so that the electronic device can decode the N encoded bit sequences through N decoding threads without waiting for a long period of time. This can improve image decoding efficiency of the electronic device.

The following uses examples to describe a specific scheme for the electronic device to scan the encoded bitstream to obtain the N-1 encoded bit sequences:

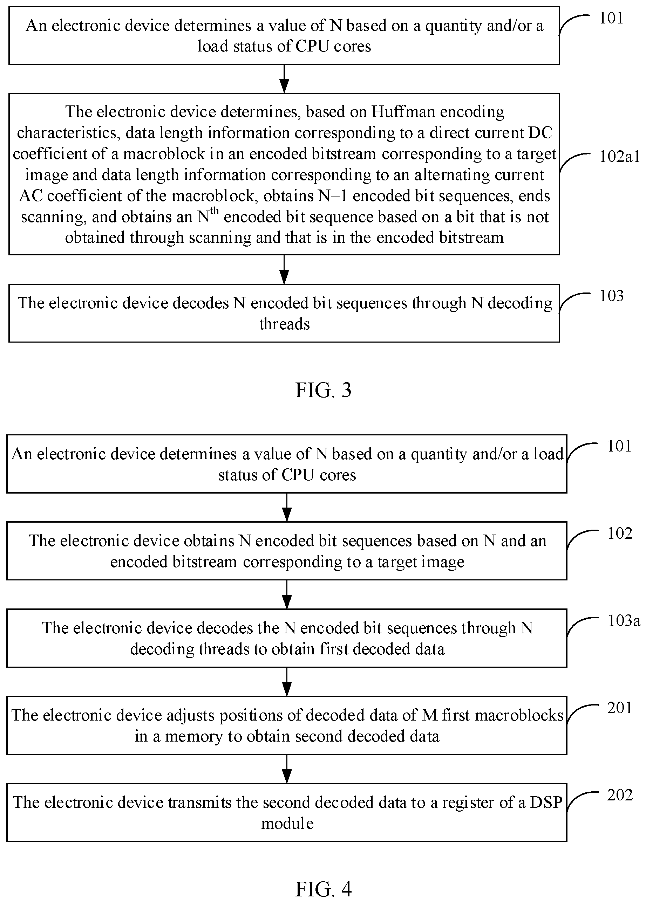

In some embodiments of this application, with reference to FIG. 2, as shown in FIG. 3, step 102a can be specifically implemented by step 102a1.

Step 102a1: The electronic device determines, based on Huffman coding characteristics, data length information corresponding to a direct current DC coefficient of a macroblock in the encoded bitstream corresponding to the target image and data length information corresponding to an alternating current AC coefficient of the macroblock, obtains N-1 encoded bit sequences, ends scanning, and obtains the N^{th} encoded bit sequence based on the bit that is not obtained through scanning and that is in the encoded bitstream.

The macroblock may be a pixel block of the target image. The macroblock may be a 4×4 macroblock (that is, a pixel block including four adjacent rows of pixels and four adjacent columns of pixels), or an 8×8 macroblock (that is, a pixel block including eight adjacent rows of pixels and eight adjacent columns of pixels). It can be understood that the target image can correspond to a plurality of macroblocks.

Each of the N image blocks may include a plurality of macroblocks. It should be noted that the "plurality of macroblocks" can be understood as at least two macroblocks.

Optionally, the macroblock may be specifically an 8×8 macroblock.

The following uses examples to describe a specific scheme for the electronic device to determine, based on the Huffman coding characteristics, the data length information corresponding to the direct current DC coefficient of the macroblock in the encoded bitstream corresponding to the target image and the data length information corresponding to the alternating current AC coefficient of the macroblock:

In some embodiments of this application, step 102a1 can be specifically implemented by steps 102a1a to 102a1c.

Step 102a1a: The electronic device scans the encoded bitstream to obtain at least one piece of first data length information.

In this embodiment of this application, each of the at least one piece of first data length information indicates an encoding length corresponding to one macroblock of the target image.

It can be understood that a quantity of the at least one piece of first data length information is equal to a quantity of macroblocks in the target image.

In some embodiments of this application, each piece of first data length information may include data length information corresponding to a DC coefficient of one macroblock and data length information corresponding to an AC coefficient of the one macroblock.

In some embodiments of this application, for each of the at least one piece of first data length information, the electronic device can read encoded bit values in the encoded bitstream one by one, and determine one piece of first data length information based on all encoded bit values that have been read by the electronic device, to determine the at least one piece of first data length information.

It can be understood that in the process of determining the at least one piece of first data length information, the electronic device can read the encoded bit values in the encoded bitstream in sequence, without performing complete decoding on each encoded bit value.

An example in which the electronic device determines any one piece of data length information is used in the following to describe a specific scheme for determining the at least one piece of first data length information:

In some embodiments of this application, step 102a1a may be specifically implemented by steps 102a1a1 to 102a1a4.

Step 102a1a1: The electronic device obtains R encoded bit values from the encoded bitstream each time.

In this embodiment of this application, R is a positive integer.

In some embodiments of this application, R may be specifically 1.

It can be understood that the electronic device can obtain one encoded bit value from the encoded bitstream each time.

Step 102a1a2: The electronic device determines whether a first Huffman table includes a bit value matching all the encoded bit values that have been obtained by the electronic device.

In this embodiment of this application, the first Huffman table is a Huffman table corresponding to the target image.

In some embodiments of this application, the first Huffman table may be a Huffman table included in a file header Header of the target image.

In this embodiment of this application, all encoded bit values that have been obtained by the electronic device may be understood as: an encoded bit value obtained by the electronic device from the encoded bitstream this time, and an encoded bit value obtained by the electronic device from the encoded bitstream before.

For example, it is assumed that an encoded bit value obtained by the electronic device from the encoded bitstream this time is 0, and that encoded bit values obtained by the electronic device from the encoded bitstream before are 1, 0, 1. In this case, all encoded bit values that have obtained by the electronic device are 1010.

In some embodiments of this application, the first Huffman table includes at least one bit value. In this case, the electronic device can determine whether the at least one bit value includes a bit value that is exactly the same as all the encoded bit values that have been obtained by the electronic device, to determine whether the first Huffman table includes a bit value matching all the encoded bit values that have been obtained by the electronic device.

Step 102a1a3: In a case that the first Huffman table includes a bit value matching all the encoded bit values that have been obtained by the electronic device, the electronic device determines one piece of third data length information that corresponds to the bit value and that is in the first Huffman table.

In some embodiments of this application, each bit value in the at least one bit value in the first Huffman table corresponds to one piece of length information; in this way, in a case that the first Huffman table includes a bit value matching all the encoded bit values that have been obtained by the electronic device, the electronic device can determine one piece of length information corresponding to the bit value matching all the encoded bit values that have been obtained by the electronic device, as one piece of third data length information.

In some embodiments of this application, in a case that the first Huffman table includes no bit value matching all the encoded bit values that have been obtained by the electronic device, the electronic device may perform steps 102a1a1 and 102a1a2 again, until the first Huffman table includes a bit value matching all the encoded bit values that have been obtained by the electronic device.

Step 102a1a4: The electronic device determines one piece of first data length information based on R and one piece of third data length information.

In some embodiments of this application, the electronic device can determine a sum of a value of R and an encoding length indicated by the one piece of third data length information, as an encoding length corresponding to one macroblock of the target image, to determine data length information indicating the encoding length as the one piece of first data length information.

In some embodiments of this application, after determining one piece of first data length information, the electronic device may also perform a decoding action based on data length information corresponding to a DC coefficient in the one piece of first data length information to obtain the DC coefficient corresponding to the one piece of first data length information. In this case, in subsequent steps, the electronic device can determine, based on the DC coefficient corresponding to the one piece of first data length information, a DC coefficient corresponding to a next piece of data length information of the one piece of first data length information.

In addition, after determining the one piece of first data length information, the electronic device can quickly obtain the N encoded bit sequences without performing a decoding action based on data length information that corresponds to the AC coefficient and that is in the one piece of first data length information.

It can be learned that the electronic device can obtain R encoded bit values from the encoded bitstream each time, and determine whether the first Huffman table includes the bit value matching all the encoded bit values that have been obtained by the electronic device; in this way, in a case that the first Huffman table includes the bit value matching all the encoded bit values that have been obtained by the electronic device, the electronic device can accurately determine, based on one piece of third data length information that corresponds to the bit value and that is in the first Huffman table, an encoding length corresponding to one macroblock of the target image, without performing complete decoding on each encoded data corresponding to the one macroblock of the target image. Therefore, time for determining the encoding length corresponding to the one macroblock of the target image can be shortened, so that the electronic device can decode the N encoded bit sequences through the N decoding threads without waiting for a long period of time. This can improve image decoding efficiency of the electronic device.

Step 102a1b: The electronic device determines N-1 pieces of second data length information based on N, size information of the target image, and at least one piece of first data length information.

In this embodiment of this application, each of the N-1 pieces of second data length information indicates an encoding length of one encoded bit sequence.

It can be understood that each piece of second data length information indicates an encoding length of one encoded bit sequence corresponding to one image block of the target image.

In some embodiments of this application, the electronic device can first determine size information of each image block in the N image blocks based on the size information of the target image, and then determine a quantity of pieces of first data length information included in each image block based on the size information of each image block and at least one piece of first data length information, so that the electronic device can determine each piece of second data length information based on the quantity of pieces of first data length information included in each image block and each piece of first data length information.

Step 102a1c: The electronic device determines the N-1 encoded bit sequences based on the encoded bitstream and the N-1 pieces of second data length information.

In some embodiments of this application, the electronic device can first determine, from the encoded bitstream, encoded bits corresponding to an encoding length indicated by the 1^{st} piece of second data length information, to determine position information of the 1^{st} encoded bit sequence and determine the 1^{st} encoded bit sequence; then determine, from the encoded bitstream, encoded bits corresponding to an encoding length indicated by the 2^{nd} second data length information, to determine position information of the 2^{nd} encoded bit sequence and determine the 2^{nd} encoded bit sequence, and so on, until the (N-1)^{th} encoded bit sequence is determined.

It can be learned that because the electronic device can first scan the encoded bitstream to obtain at least one piece of first data length information indicating an encoding length corresponding to at least one macroblock of the target image, to determine the encoding length corresponding to the at least one macroblock; and then determine, based on N, the size information of the target image, and at least one piece of first data length information, N-1 pieces of second data length information indicating an encoding length corresponding to N-1 image blocks of the target image, to determine the encoding length corresponding to the N-1 image blocks. In this case, the electronic device can determine, from the encoded bitstream based on the encoding length corresponding to the N-1 image blocks, each encoded bit sequence corresponding to each image block, without performing complete decoding on each encoded bit value in the encoded bitstream by the electronic device. Therefore, time spent in determining the N encoded bit sequences corresponding to the N image blocks of the target image can be shortened, so that the electronic device can decode the N encoded bit sequences through the N decoding threads without waiting for a long period of time. This can improve image decoding efficiency of the electronic device.

Specifically, in the process of decoding an image with N being 2 and a target image being 640×1440, in the related art, it takes 2000 µs to perform complete Huffman decoding. Using the image decoding method provided by embodiments of this application, the electronic device can first determine one piece of second data length information, where the one piece of data length information indicates a length of one encoded bit sequence corresponding to one image block, taking 500 µs, then start two decoding threads through two CPU cores to perform Huffman entropy decoding on two encoded bit sequences, taking 1000 µs, with total time 1500 µs, that is, using the image decoding method provided by embodiments of this application, in the process of performing Huffman decoding on the target image, a decoding speed of the electronic device is improved by 25% compared with a decoding speed in the related art.

Step 103: The electronic device decodes the N encoded bit sequences through the N decoding threads.

In this embodiment of this application, for each decoding thread in the N decoding threads, one of the decoding threads corresponds to one of the encoded bit sequences.

In some embodiments of this application, the electronic device can first create N-1 decoding threads respectively through N-1 first CPU cores, use a first thread as one decoding thread through a second CPU core to obtain N decoding threads, and then decode the N encoded bit sequences through the N decoding threads.

The first thread is a thread performing steps 101 and 102, and the second CPU core is a CPU core running the first thread in the CPU of the electronic device.

In some embodiments of this application, the electronic device can perform parallel decoding or serial decoding on the N encoded bit sequences through the N decoding threads.

In some embodiments of this application, the electronic device can perform Huffman entropy decoding on one encoded bit sequence through each decoding thread.

It should be noted that for the description of Huffman entropy decoding, refer to the specific description in the related art. Details are not described herein in embodiments of this application.

This embodiment of this application provides the image decoding method. The electronic device can determine the value of N based on at least one of the quantity of CPU cores and the load status of the CPU cores, where N is an integer greater than 1, and obtain the N encoded bit sequences based on N and the encoded bitstream corresponding to the target image, so that the electronic device can decode the N encoded bit sequences through the N decoding threads. The electronic device determines the value of N based on at least one of the quantity of CPU cores and the load status of the CPU cores, that is, the value of N is related to the quantity of CPU cores and/or the load status of the CPU cores. This can avoid the following case: The electronic device needs a long period of time to decode an image due to CPU overload. In addition, because the N encoded bit sequences are decoded through the N decoding threads, time for decoding the image can be shortened. In summary, image decoding efficiency of the electronic device is improved.

In some embodiments of this application, after the electronic device decodes the N encoded bit sequences through the N decoding threads, the electronic device can also adjust a position, in the memory, of decoded data obtained through decoding, and transmit adjusted decoded data to a register of a heterogeneous computing unit (for example, a digital signal processor (Digital Signal Processor, DSP) module), where the register may be provided in plurality (for example, 30), and a quantity of the registers can be related to a quantity of rows or columns of the decoded data included in the macroblock (for example, a second macroblock in the following embodiments) included in the adjusted decoded data, so that the register can perform inverse DCT on the decoded data to obtain YUV data of the target image. Details are described below by using examples.

In some embodiments of this application, with reference to FIG. 1, as shown in FIG. 4, step 103 can be specifically implemented by step 103a. After step 103a, the image decoding method provided by embodiments of this application may further include steps 201 and 202.

Step 103a: The electronic device decodes the N encoded bit sequences through the N decoding threads to obtain first decoded data.

In this embodiment of this application, the first decoded data includes decoded data of M first macroblocks, the target image corresponds to M first macroblocks, and M is an integer greater than 1.

In some embodiments of this application, the N image blocks include M first macroblocks, and each image block includes at least two first macroblocks.

In some embodiments of this application, after obtaining the first decoded data, the electronic device can store the first decoded data in the memory. After the first decoded data is stored in the memory, decoded data of each first macroblock is contiguous in the memory, that is, different rows of decoded data of the first macroblock are contiguous in the memory.

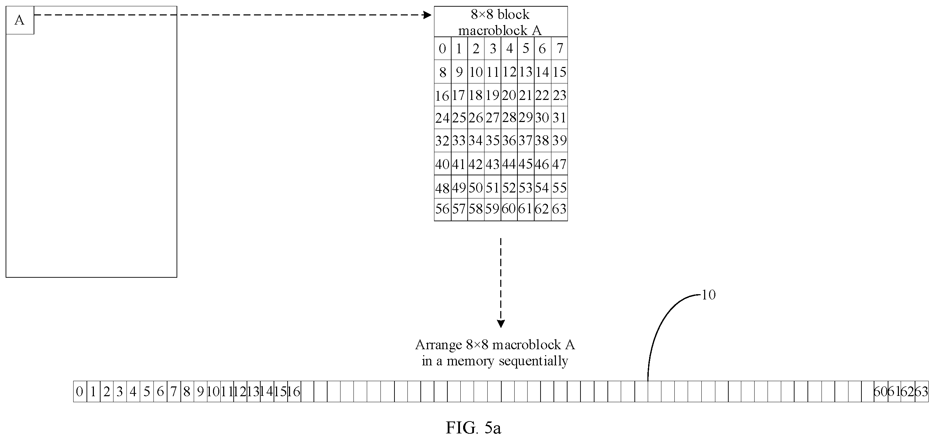

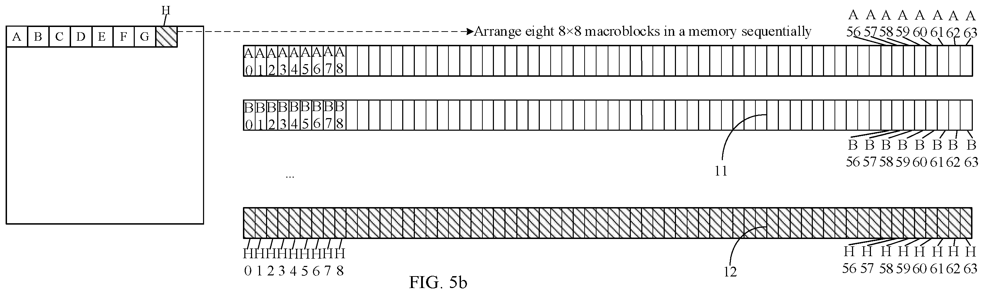

For example, it is assumed that M=8, and that each first macroblock in the M first macroblocks is an 8×8 macroblock. In this case, after decoding the N encoded bit sequences through the N decoding threads, the electronic device can obtain the first decoded data (that is, eight groups of decoded data), where each group of decoded data includes 64 pieces of decoded data, as shown in FIG. 5a. At this time, the electronic device can store 64 pieces of decoded data (for example, A0 to A63) in the 1^{st} first macroblock (for example, macroblock A) in the M first macroblocks into a same row of storage space in the memory of the electronic device. For example, the electronic device can store A0 to A63 into first-row storage space 10 in the memory of the electronic device, as shown in FIG. 5b. Then, the electronic device can store 64 pieces of decoded data (for example, B0 to B63) in the 2^{nd} first macroblock (for example, macroblock B) in the M first macroblocks into a same row of storage space in the memory of the electronic device. For example, the electronic device can store B0 to B63 into second-row storage space 11 in the memory of the electronic device, and so on, until the 64 pieces of decoded data (for example, H0 to H63) in the last first macroblock (for example, macroblock H) in the M first macroblocks are stored into a same row of storage space in the memory of the electronic device. For example, the electronic device can store H0 to H63 into H^{th}-row storage space 12 in the memory of the electronic device.

It should be noted that in FIG. 5a and FIG. 5b, decoded data of each first macroblock is located in a same row of storage space in the memory, indicating that the decoded data of each first macroblock is contiguous in the memory. It is not limited that the storage space needs to be divided into rows.

Step 201: The electronic device adjusts positions of the decoded data of the M first macroblocks in the memory to obtain second decoded data.

In this embodiment of this application, the second decoded data includes decoded data of M second macroblocks. After position adjustment, different rows of decoded data of the first macroblock are non-contiguous in the memory, and same rows of decoded data of adjacent first macroblocks are contiguous in the memory.

In some embodiments of this application, each second macroblock in the M second macroblocks includes one row of decoded data of the M first macroblocks.

In some embodiments of this application, the electronic device can adjust the positions of the decoded data of the M first macroblocks in the memory via the CPU core to obtain the second decoded data.

It can be understood that a main frequency of the CPU core is higher than a main frequency of each register of the DSP, and time spent in adjusting the positions of the decoded data of the M first macroblocks in the memory via the CPU core is shorter than time spent in adjusting the positions of the decoded data of the M first macroblocks in the memory via each register. Therefore, the electronic device can quickly adjust the positions of the decoded data of the M first macroblocks in the memory via the CPU core.

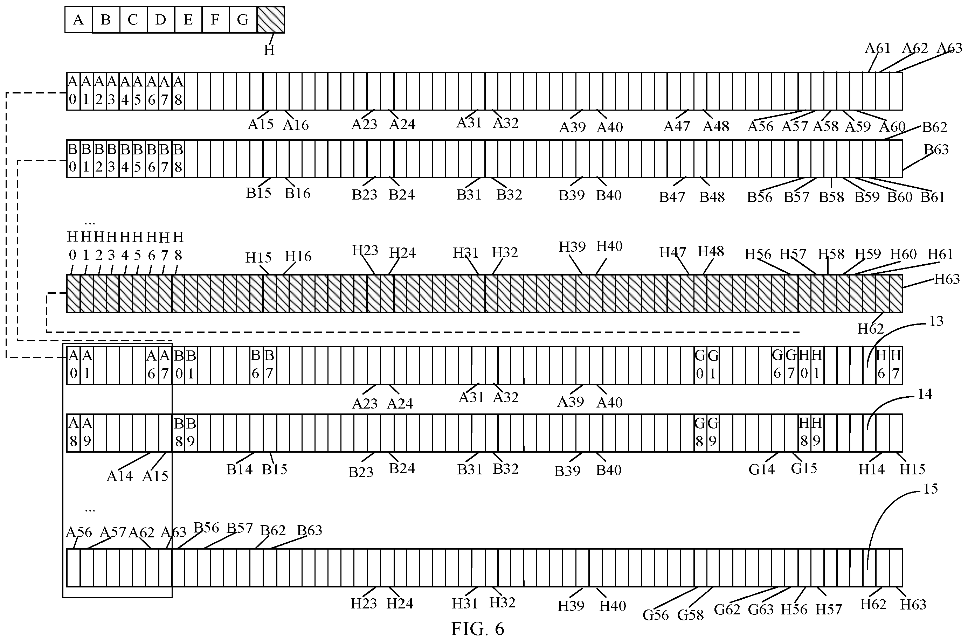

For example, with reference to the above examples and FIG. 5b, as shown in FIG. 6, the electronic device can first store a first row of decoded data included in eight groups of decoded data into first-row storage space 13 in the memory of the electronic device via the CPU core, that is, store 64 pieces of decoded data, A0 to A7, B0 to B7, C0 to C7, ..., and H0 to H7, into first-row storage space 13 in the memory of the electronic device, and store a second row of decoded data included in the eight groups of decoded data into second-row storage space 14 in the memory of the electronic device, that is, store 64 pieces of decoded data, A8 to A15, B8 to B15, C8 to C15, ..., and H8 to H15, into second-row storage space 14 in the memory of the electronic device, and so on, until an eighth row of decoded data included in the eight groups of decoded data is stored into eighth-row storage space 15 in the memory of the electronic device, that is, 64 pieces of decoded data, A56 to A63, B56 to B63, C56 to C63, ..., and H56 to H63, are stored into eighth-row storage space 15 in the memory of the electronic device, so as to obtain the eight groups of decoded data, that is, obtain the second decoded data.

It should be noted that in FIG. 6, different rows of decoded data of the first macroblock are located in different rows of storage spaces in the memory, and same rows of decoded data of adjacent first macroblocks are located in a same row of storage space in the memory, indicating that different rows of decoded data of the first macroblock are non-contiguous in the memory, and same rows of decoded data of adjacent first macroblocks are contiguous in the memory. In actual application, the memory may not include any row of storage space, that is, there is no need to divide the memory into a plurality of rows of storage spaces.

In this embodiment of this application, the register needs to use data of a macroblock for calculation when performing inverse DCT, and data of one macroblock is in a same register after the decoded data is input to the plurality of registers of the DSP. In addition, for DCT calculation, row data needs to be obtained, and undergoes mathematical operations with other rows. If the data of the macroblock is in the same register, complex shift and XOR operations need to be performed to obtain and calculate the data, the process has high complexity and low efficiency. Therefore, in embodiments of this application, in a case that the electronic device obtains the decoded data (that is, the first decoded data) of the M first macroblocks, the electronic device can first adjust the positions of the decoded data of the M first macroblocks in the memory via the CPU to obtain the decoded data (that is, second decoded data) of the M second macroblocks, where after position adjustment, different rows of decoded data of the first macroblock are non-contiguous in the memory, and same rows of decoded data of adjacent first macroblocks are contiguous in the memory, so that the electronic device can transmit the second decoded data to the plurality of registers of the DSP, and each register can directly perform inverse DCT by using the second decoded data to generate YUV data of the target image.

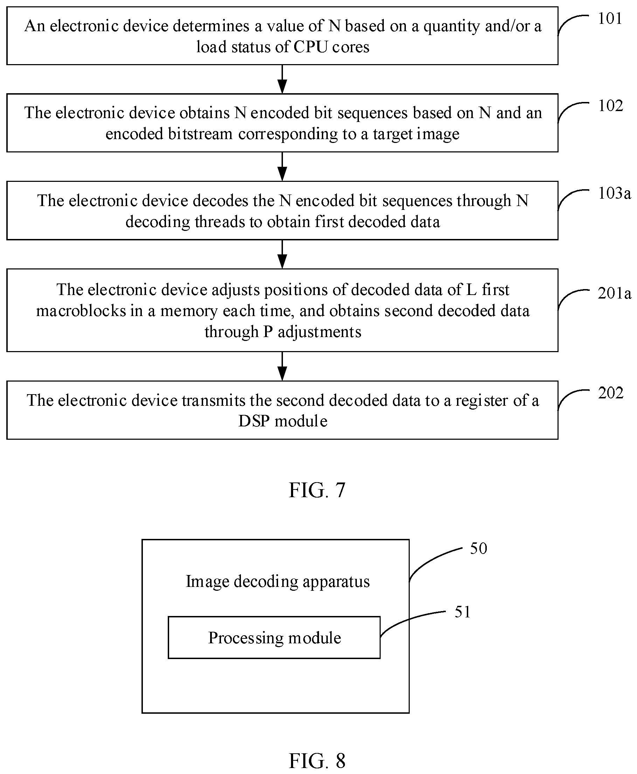

In some embodiments of this application, with reference to FIG. 4, as shown in FIG. 7, step 201 can be specifically implemented by step 201a.

Step 201a: The electronic device adjusts positions of decoded data of L first macroblocks in the memory each time, and obtains the second decoded data through P adjustments.

In this embodiment of this application, M is equal to L multiplied by P; and L is determined based on a bit width of the register, a length of one piece of decoded data, and an amount of one row of data of a macroblock.

In some embodiments of this application, L is determined based on a quotient of the first value and the amount of the one row of data of the macroblock, and the first value is a quotient of the bit width of the register and one decoding length.

For example, it is assumed that the quantity M of the M first macroblocks is 8, the first macroblock is an 8×8 macroblock, a bit width of the register is 1024 bits (bit), a length of one piece of decoded data is 16 bits, and that an amount of each row of data of the macroblock is 8. In this case, L=1024/16/8=8, and P=8/8=1, that is, the electronic device adjusts positions of decoded data of eight first macroblocks in the memory each time, and can obtain the second decoded data through one adjustment.

It can be learned that the electronic device can determine, based on a bit width of a register, a length of one piece of decoded data, and an amount of one row of data of the macroblock, a quantity of first macroblocks adjusted each time; in this case, the second decoded data obtained through adjustment matches the bit width of the register. Therefore, in subsequent steps, a plurality of registers can directly perform inverse DCT by using the second decoded data to obtain the decoded data of the target image, without performing adjustment again. In this way, time spent in obtaining the decoded data of the target image can be shortened, that is, image decoding efficiency of the electronic device can be improved.

Step 202: The electronic device transmits the second decoded data to a register of a DSP.

In some embodiments of this application, a quantity of the above registers can match a quantity of rows of the decoded data included in the second macroblock. For example, in a case that the second macroblock is an 8×8 macroblock, the electronic device can transmit the second decoded data to eight registers of the DSP.

In some embodiments of this application, after the second decoded data is transmitted to the register of the DSP, the register can perform an inverse DCT operation on the second decoded data to obtain image data of the target image, so that the electronic device can display the target image based on the image data.

Optionally, after the register performs an inverse DCT operation on the second decoded data, the electronic device can obtain YUV data of the target image, so that the electronic device can continue to perform a color space conversion operation on the YUV data via a heterogeneous computing unit DSP, and the electronic device can obtain red green blue (Red Green Blue, RGB) data of the target image and display the target image based on the RGB data of the target image.

In this embodiment of this application, same rows of decoded data of different macroblocks need to be used when the register performs an inverse DCT operation on the decoded data. Therefore, in embodiments of this application, the electronic device can adjust the positions of the decoded data of the M first macroblocks in the memory to obtain the second decoded data. After position adjustment, same rows of decoded data of adjacent first macroblocks are contiguous in the memory, so that after the second decoded data is transmitted to the register of the DSP, the register can directly perform an inverse DCT operation by using the second decoded data, without the register performing a plurality of operations to adjust the positions of the decoded data of the M first macroblocks in the memory of the register. This can shorten time spent in obtaining the decoded data of the target image, that is, can improve image decoding efficiency of the electronic device.

It can be learned that after obtaining the first decoded data, the electronic device can adjust the positions of the decoded data of the M first macroblocks in the memory to obtain the decoded data (that is, the second decoded data) of the M second macroblocks; in this case, the electronic device can transmit the decoded data of the M second macroblocks to the register of the DSP, to perform subsequent decoding actions on the decoded data of the M second macroblocks via a DSP with lower power consumption, without performing subsequent decoding actions on the decoded data of the M second macroblocks via the CPU core with higher power consumption. Therefore, power consumption of image decoding of the electronic device can be reduced. In addition, because the register of the DSP has a large bit width, completing the DCT inverse transform and color space conversion by the DSP can further improve the image decoding efficiency of the electronic device.

The image decoding method provided by embodiments of this application can be performed by an image decoding apparatus. In embodiments of this application, an image decoding apparatus provided by an embodiment of this application is described by using the image decoding apparatus performing the image decoding method as an example.

FIG. 8 is a possible schematic diagram of a structure of an image decoding apparatus according to an embodiment of this application. As shown in FIG. 8, the image decoding apparatus 50 may include a processing module 51, configured to: determine a value of N based on a quantity and/or a load status of CPU cores, where N is an integer greater than 1; obtain N encoded bit sequences based on N and an encoded bitstream corresponding to a target image; and decode the N encoded bit sequences through N decoding threads, where one of the decoding threads corresponds to one of the encoded bit sequences.

This embodiment of this application provides the image decoding apparatus. The image decoding apparatus determines the value of N based on at least one of the quantity of CPU cores and the load status of the CPU cores, that is, the value of N is related to the quantity of CPU cores and/or the load status of the CPU cores This can avoid the following case: The image decoding apparatus needs a long period of time to decode an image due to CPU overload. In addition, because the N encoded bit sequences are decoded through the N decoding threads, time for decoding the image can be shortened. In summary, image decoding efficiency of the image decoding apparatus is improved.

In a possible implementation, the processing module 51 is specifically configured to: scan the encoded bitstream corresponding to the target image to obtain N-1 encoded bit sequences, end scanning, and obtain the N^{th} encoded bit sequence based on the bit that is not obtained through scanning and that is in the encoded bitstream.

In a possible implementation, the processing module 51 is specifically configured to determine, based on Huffman coding characteristics, data length information corresponding to a DC coefficient of a macroblock in the encoded bitstream corresponding to the target image and data length information corresponding to an AC coefficient of the macroblock.

In a possible implementation, the processing module 51 is specifically configured to decode the N encoded bit sequences through the N decoding threads to obtain first decoded data, where the first decoded data includes decoded data of M first macroblocks, and the target image corresponds to the M first macroblocks; and after decoding the N encoded bit sequences through the N decoding threads to obtain the first decoded data, adjust positions of the decoded data of the M first macroblocks in a memory to obtain second decoded data, where the second decoded data includes decoded data of M second macroblocks; and after position adjustment, different rows of decoded data of the first macroblock are non-contiguous in the memory, and same rows of decoded data of adjacent first macroblocks are contiguous in the memory, where M is an integer greater than 1; and transmit the second decoded data to a register of a DSP.

In a possible implementation, the processing module 51 is specifically configured to adjust positions of decoded data of L first macroblocks in the memory each time, and obtain the second decoded data through P adjustments; where M is equal to L multiplied by P; L is determined based on a bit width of the register, a length of one piece of decoded data, and an amount of one row of data of a macroblock, and L and P both are positive integers.

The image decoding apparatus in embodiments of this application may be an electronic device, or a component in an electronic device, such as an integrated circuit or a chip. The electronic device may be a terminal, or a device other than a terminal. For example, the electronic device may be a mobile phone, a tablet computer, a notebook computer, a palmtop computer, an on-board electronic device, a mobile internet device (mobile internet device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (network attached storage, NAS), a personal computer (personal computer, PC), a television (television, TV), a teller machine, a self-service machine, or the like. This is not specifically limited in embodiments of this application.

The image decoding apparatus in this embodiment of this application may be a device with an operating system. The operating system can be an Android (Android) operating system, an iOS operating system, or another possible operating system. This is not specifically limited in this embodiment of this application.

The image decoding apparatus provided by this embodiment of this application can implement each process implemented by the method embodiments in FIGS. 1 to 7. To avoid repetition, details are not described herein again.

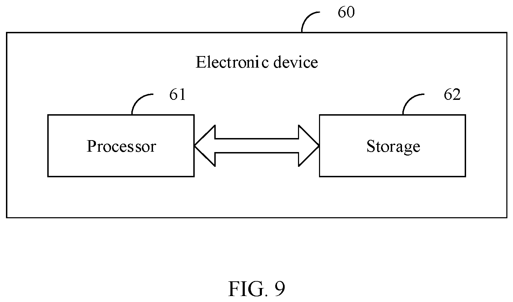

In some embodiments of this application, as shown in FIG. 9, an embodiment of this application further provides an electronic device 60, including a processor 61 and a storage 62. The storage 62 stores a program or instructions runnable on the processor 61; and when the program or instructions are executed by the processor 61, the various processing steps of the above image decoding method embodiments are implemented. In addition, the same technical effect can be achieved. To avoid repetition, details are not described herein again.

It should be noted that the electronic device in embodiments of this application includes the above mobile electronic device and a non-mobile electronic device.

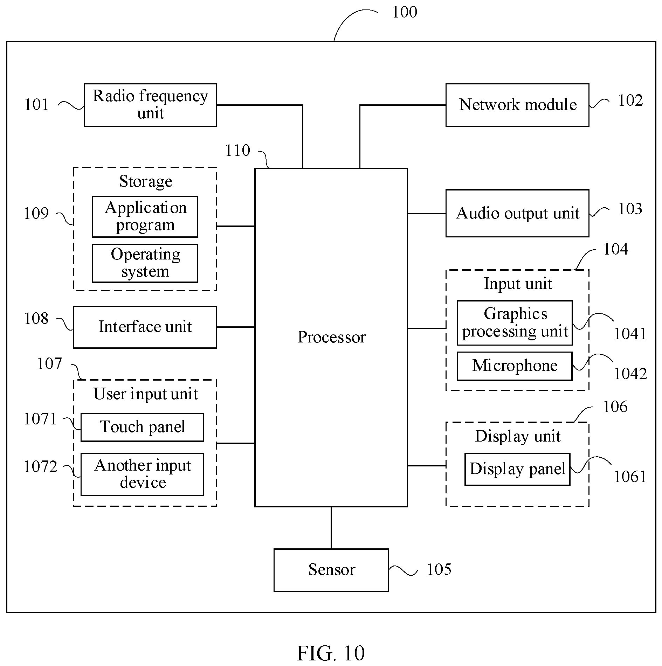

FIG. 10 is a schematic diagram of a structure of hardware of an electronic device implementing an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a storage 109, and a processor 110.

Those skilled in the art can understand that the electronic device 100 may also include a power supply (such as a battery) for supplying power to each component, and the power supply can be logically connected to the processor 110 via a power management system, so as to implement functions such as charging, discharging, and power consumption management via the power management system. The structure of the electronic device shown in FIG. 10 does not constitute a limitation to the electronic device. The electronic device may include more or fewer components than illustrated, or combine some components, or arrange different components. Details are not described herein.

The processor 110 is configured to: determine a value of N based on a quantity and/or a load status of CPU cores, where N is an integer greater than 1; obtain N encoded bit sequences based on N and an encoded bitstream corresponding to a target image; and decode the N encoded bit sequences through N decoding threads.

One of the decoding threads corresponds to one of the encoded bit sequences.

This embodiment of this application provides the electronic device. The electronic device determines the value of N based on at least one of the quantity of CPU cores and the load status of the CPU cores, that is, the value of N is related to the quantity of CPU cores and/or the load status of the CPU cores. This can avoid the following case: The electronic device needs a long period of time to decode an image due to CPU overload. In addition, because the N encoded bit sequences are decoded through the N decoding threads, time for decoding the image can be shortened. In summary, image decoding efficiency of the electronic device is improved.

In some embodiments of this application, the processor 110 is specifically configured to: scan the encoded bitstream corresponding to the target image to obtain N-1 encoded bit sequences, end scanning, and obtain the N^{th} encoded bit sequence based on a bit that is not obtained through scanning and that is in the encoded bitstream.

In some embodiments of this application, the processor 110 is specifically configured to determine, based on Huffman coding characteristics, data length information corresponding to a DC coefficient of a macroblock in the encoded bitstream corresponding to the target image and data length information corresponding to an AC coefficient of the macroblock.

In some embodiments of this application, the processor 110 is specifically configured to decode the N encoded bit sequences through the N decoding threads to obtain first decoded data, where the first decoded data includes decoded data of M first macroblocks, and the target image corresponds to the M first macroblocks.

The processor 110 is further configured to: adjust positions of the decoded data of the M first macroblocks in a memory to obtain second decoded data, where the second decoded data includes decoded data of M second macroblocks; and after position adjustment, different rows of decoded data of the first macroblock are non-contiguous in the memory, and same rows of decoded data of adjacent first macroblocks are contiguous in the memory, where M is an integer greater than 1; and transmit the second decoded data to a register of a DSP.

In some embodiments of this application, the processor 110 is specifically configured to: adjust positions of decoded data of L first macroblocks in the memory each time, and obtain the second decoded data through P adjustments.

M is equal to L multiplied by P; L is determined based on a bit width of the register, a length of one piece of decoded data, and an amount of one row of data of a macroblock, and L and P both are positive integers.

It should be understood that, in embodiments of this application, the input unit 104 may include a graphics processing unit (graphics processing unit, GPU) 1041 and a microphone 1042, and the graphics processing unit 1041 processes image data of still pictures or videos obtained by an image capture apparatus (such as a camera) in a video capture mode or an image capture mode. The display unit 106 may include a display panel 1061, which may be configured in the form of a liquid crystal display, an organic light-emitting diode, or the like. The user input unit 107 includes at least one of a touch panel 1071 and another input device 1072. The touch panel 1071 is also referred to as a touch screen. The touch panel 1071 may include two parts: a touch detection device and a touch controller. The another input device 1072 may include but is not limited to a physical keyboard, a function key (such as a volume control key or a switch key), a trackball, a mouse, a joystick, or the like. Details are not described herein.

The storage 109 can be used to store software programs as well as various data. The storage 109 may mainly include a first storage area storing a program or instructions and a second storage area storing data. The first storage area can store an operating system, an application program or instructions required for at least one function (such as a sound playback function and an image playback function), and the like. In addition, the storage 109 may include a volatile memory or a non-volatile memory, or the storage 109 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random access memory, RAM), a static random-access memory (static RAM, SRAM), a dynamic random-access memory (dynamic RAM, DRAM), a synchronous dynamic random-access memory (synchronous DRAM, SDRAM), a double data rate synchronous dynamic random-access memory (double data rate SDRAM, DDRSDRAM), an enhanced synchronous dynamic random-access memory (enhanced SDRAM, ESDRAM), a synch link dynamic random-access memory (synch link DRAM, SLDRAM), and a direct rambus random-access memory (direct rambus RAM, DRRAM). The storage 109 in embodiments of this application includes but is not limited to these and any other suitable types of memories.

The processor 110 may include one or more processing units. Optionally, the processor 110 integrates an application processor and a modem processor. The application processor mainly processes operations related to the operating system, the user interface, the application program, and the like, and the modem processor mainly processes wireless communication signals such as a baseband processor. It can be understood that the above modem processor may not be integrated into the processor 110.

An embodiment of this application further provides a readable storage medium. The readable storage medium stores a program or instructions; and when the program or instructions are executed by a processor, each process of the above image decoding method embodiments is implemented. In addition, the same technical effect can be achieved. To avoid repetition, details are not described herein again.

The processor is a processor in the electronic device described in the above embodiments. The readable storage medium includes a computer-readable storage medium such as a computer read-only memory ROM, a random-access memory RAM, a magnetic disk, or an optical disk.

An embodiment of this application further provides a chip. The chip includes a processor and a communication interface. The communication interface is coupled to the processor, and the processor is configured to run a program or instructions to implement each process of the above image decoding method embodiments. In addition, the same technical effect can be achieved. To avoid repetition, details are not described herein.

It should be understood that the chip mentioned in embodiments of this application may also be referred to a system-level chip, a system chip, a chip system, a system on chip, or the like.

An embodiment of this application provides a computer program product. The program product is stored in a storage medium, and the program product is executed by at least one processor to implement each process of the above image decoding method embodiments. In addition, the same technical effect can be achieved. To avoid repetition, details are not described herein.

It should be noted that, in this specification, the term "including", "comprising" or any other variant thereof is intended to cover non-exclusive inclusion, so that a process, method, article or apparatus including a series of elements not only includes those elements, but also includes other elements not explicitly listed, or elements inherent to such a process, method, article or apparatus. Without further limitation, an element defined by the statement "including one ..." does not exclude the existence of other identical elements in the process, method, article or apparatus including the element. In addition, it should be pointed out that the scope of the methods and apparatuses in embodiments of this application is not limited to performing functions in the order shown or discussed, and may also include performing functions substantially simultaneously or in reverse order based on the involved functions, for example, the described methods can be performed in an order different from that described, and various steps may alternatively be added, omitted, or combined. In addition, features described with reference to certain examples can be combined in other examples.

Through the description of the above embodiments, those skilled in the art can clearly understand that the above embodiment methods may be implemented by means of software plus a necessary general hardware platform, and of course, hardware may alternatively be used, but in many cases the former is a better implementation. Based on this understanding, the technical solution of this application essentially or the part that contributes to the existing technology can be embodied in the form of a computer software product stored in a storage medium (such as a ROM/RAM, a magnetic disk, or an optical disk), including several instructions to make a terminal (which may be a mobile phone, a computer, a server, a network device, or the like) perform the methods described in embodiments of this application.

Embodiments of this application have been described above with reference to the accompanying drawings, but this application is not limited to the above specific embodiments, and the above specific embodiments are only examples, not restrictive. Those of ordinary skill in the art can make many forms under the inspiration of this application without departing from the purpose of this application and the scope protected by the claims, all of which belong to the protection of this application.

## Claims

1. An image decoding method, wherein the method comprises:
determining, by an electronic device, a value of N based on a quantity and/or a load status of central processing unit CPU cores, wherein N is an integer greater than 1;
obtaining, by the electronic device, N encoded bit sequences based on N and an encoded bitstream corresponding to a target image; and
decoding, by the electronic device, the N encoded bit sequences through N decoding threads, wherein
one of the decoding threads corresponds to one of the encoded bit sequences.

2. The method according to claim 1, wherein the obtaining, by the electronic device, N encoded bit sequences based on N and an encoded bitstream corresponding to a target image comprises:
scanning, by the electronic device, the encoded bitstream corresponding to the target image to obtain N-1 encoded bit sequences, ending scanning, and obtaining the N^{th} encoded bit sequence based on a bit that is not obtained through scanning and that is in the encoded bitstream.

3. The method according to claim 2, wherein the scanning, by the electronic device, the encoded bitstream corresponding to the target image comprises:
determining, by the electronic device based on Huffman coding characteristics, data length information corresponding to a DC coefficient of a macroblock in the encoded bitstream corresponding to the target image and data length information corresponding to an AC coefficient of the macroblock.

4. The method according to claim 1, wherein the decoding, by the electronic device, the N encoded bit sequences through N decoding threads comprises:
decoding, by the electronic device, the N encoded bit sequences through the N decoding threads to obtain first decoded data, wherein the first decoded data comprises decoded data of M first macroblocks, and the target image corresponds to the M first macroblocks; and
after the decoding the N encoded bit sequences through the N decoding threads to obtain the first decoded data, the method further comprises:
adjusting, by the electronic device, positions of the decoded data of the M first macroblocks in a memory to obtain second decoded data, wherein the second decoded data comprises decoded data of M second macroblocks; and after position adjustment, different rows of decoded data of the first macroblock are non-contiguous in the memory, and same rows of decoded data of adjacent first macroblocks are contiguous in the memory, wherein M is an integer greater than 1; and
transmitting, by the electronic device, the second decoded data to a register of a digital signal processor DSP.

5. The method according to claim 4, wherein the adjusting, by the electronic device, positions of the decoded data of the M first macroblocks in a memory to obtain second decoded data comprises:
adjusting, by the electronic device, positions of decoded data of L first macroblocks in the memory each time, and obtaining the second decoded data through P adjustments, wherein
M is equal to L multiplied by P; L is determined based on a bit width of the register, a length of one piece of decoded data, and an amount of one row of data of a macroblock, and L and P both are positive integers.

6. An image decoding apparatus, wherein the image decoding apparatus comprises:
a processing module, configured to: determine a value of N based on a quantity and/or a load status of CPU cores, wherein N is an integer greater than 1; obtain N encoded bit sequences based on N and an encoded bitstream corresponding to a target image; and decode the N encoded bit sequences through N decoding threads, wherein
one of the decoding threads corresponds to one of the encoded bit sequences.

7. The image decoding apparatus according to claim 6, wherein the processing module is specifically configured to: scan the encoded bitstream corresponding to the target image to obtain N-1 encoded bit sequences, end scanning, and obtain the N^{th} encoded bit sequence based on a bit that is not obtained through scanning and that is in the encoded bitstream.

8. The image decoding apparatus according to claim 7, wherein the processing module is specifically configured to determine, based on Huffman coding characteristics, data length information corresponding to a DC coefficient of a macroblock in the encoded bitstream corresponding to the target image and data length information corresponding to an AC coefficient of the macroblock.

9. The image decoding apparatus according to claim 6, wherein the processing module is specifically configured to: decode the N encoded bit sequences through the N decoding threads to obtain first decoded data, wherein the first decoded data comprises decoded data of M first macroblocks, and the target image corresponds to the M first macroblocks; and after the N encoded bit sequences are decoded through the N decoding threads to obtain the first decoded data, adjust positions of the decoded data of the M first macroblocks in a memory to obtain second decoded data, wherein the second decoded data comprises decoded data of M second macroblocks; and after position adjustment, different rows of decoded data of the first macroblock are non-contiguous in the memory, and same rows of decoded data of adjacent first macroblocks are contiguous in the memory, wherein M is an integer greater than 1; and transmit the second decoded data to a register of a DSP.

10. The image decoding apparatus according to claim 9, wherein the processing module is specifically configured to adjust positions of decoded data of L first macroblocks in the memory each time, and obtain the second decoded data through P adjustments, wherein
M is equal to L multiplied by P; L is determined based on a bit width of the register, a length of one piece of decoded data, and an amount of one row of data of a macroblock, and L and P both are positive integers.

11. An electronic device, comprising a processor and a storage, wherein the storage stores a program or instructions executable on the processor; and when the program or instructions are executed by the processor, the steps of the image decoding method according to any one of claims 1 to 5 are implemented.

12. A readable storage medium, wherein a program or instructions are stored on the readable storage medium; and when the program or instructions are executed by a processor, the steps of the image decoding method according to any one of claims 1 to 5 are implemented.

13. A chip, wherein the chip comprises a processor and a communication interface, the communication interface is coupled to the processor, and the processor is configured to run a program or instructions to implement the steps of the image decoding method according to any one of claims 1 to 5.

14. A computer program product, wherein the computer program product is stored in a non-volatile storage medium, the computer program product is executed by at least one processor to implement the steps of the image decoding method according to any one of claims 1 to 5.

15. An electronic device, the electronic device being configured to perform the steps of the image decoding method according to any one of claims 1 to 5.
